# EUROPÄISCHE PATENTANMELDUNG

(11) **EP 3 079 004 A1**
(43) Veröffentlichungstag der Anmeldung: **12.10.2016**
(21) Anmeldenummer: 16162682.5
(22) Anmeldetag: 29.03.2016
(51) Int. Cl.: G02B 27/01

(54) **MODULARES HEAD-UP-DISPLAY FÜR EIN KRAFTFAHRZEUG**

(30) Priorität: 11.04.2015 DE 102015004744
(71) Anmelder: AUDI AG, 85045 Ingolstadt (DE)
(72) Erfinder: Wall, Christian, 85122 Hitzhofen (DE); Ostermeier, Ralf, 85088 Irsching (DE)

(57) **Zusammenfassung**

Die Erfindung betrifft ein modulares Head-Up-Display-System oder Kopfoben-Anzeige-System (1) für ein Kraftfahrzeug, mit einem Modul (1') eines ersten Modultyps und einem weiteren Modul (1") eines zweiten Modultyps. Das Modul (1') des ersten Modultyps weist dabei ein Gehäuse (5), eine in dem Gehäuse (5) angeordnete Bildgebungseinheit (2) zum Erzeugen einer optischen Bildinformation und eine an dem Gehäuse (5) angeordnete Kombiniereinheit (4) zum Überlagern der erzeugten optischen Bildinformation mit einer weiteren optischen Bildinformation auf, wobei das Modul (1') ausgelegt ist, die erzeugte Bildinformation über eine außerhalb des Gehäuses (5) in einer vorbestimmten Lage angeordnete optische Umlenkeinheit (3) auf die Kombiniereinheit (4) zu projizieren, um so die optische Abbildungsleistung eines Kopf-oben-Anzeige-Systems (1) für ein Kraftfahrzeug zu verbessern. Hierfür weist das weitere Modul (1 ") des zweiten Modultyps eine Umlenkeinheit (3) zum Umlenken der von der Bildgebungseinheit (2) erzeugten optischen Bildinformation zu der Kombiniereinheit (4) auf, die dem Überlagern der erzeugten optischen Bildinformation mit der weiteren optischen Bildinformation dient, wobei die Umlenkeinheit (3) an einem Trägerelement (10) gehalten ist, welches die Umlenkeinheit (3) außenseitig des Gehäuses (5) der Bildgebungseinheit (2) in einer vorbestimmten Lage hält.

## Beschreibung

Die Erfindung betrifft eine modulare Kopf-oben-Anzeige, auch bekannt als Head-Up-Display (HUD), für ein Kraftfahrzeug, mit einem Modul eines ersten Modultyps und einem weiteren Modul eines zweiten Modultyps. Sie betrifft des Weiteren Module des ersten und des zweiten Modultyps. Dabei umfasst ein Modul des ersten Modultyps ein Gehäuse, eine in dem Gehäuse angeordnete Bildgebungseinheit zum Erzeugen einer optischen Bildinformation und eine an dem Gehäuse angeordnete Kombiniereinheit zum Überlagern der erzeugten optischen Bildinformation mit einer weiteren optischen Bildinformation. Das Modul des zweiten Modultyps umfasst eine Umlenkeinheit zum Umlenken einer von einer Bilderzeugungseinheit erzeugten optischen Bildinformation zu einer Kombiniereinheit, die dem Überlagern der erzeugten optischen Bildinformation mit einer weiteren optischen Bildinformation dient, umfasst.

Head-Up-Display-Systeme oder Kopf-oben-Anzeige-Systeme mit einer integrierten Kombiniereinheit, sogenannte combiner-Head-Up-Displays (cHUD) werden in Kraftfahrzeugen verwendet, um dem Fahrzeugführer Informationen in Form von Bildinformationen direkt ins Sichtfeld zu projizieren. Im Gegensatz zu konventionellen Windschutzscheiben-Head-Up-Displays, bei welchem die Windschutzscheibe gleichzeitig als Windschutzscheibe und als Kombiniereinheit, also als sogenannter combiner, Kombinierspiegel oder Kombinierelement, dient, verfügt ein cHUD über eine geräteeigene, integrierte Kombiniereinheit, welche ausschließlich zur Darstellung des virtuellen Bildes dient. Typischerweise ist die integrierte Kombiniereinheit in Form einer bewegbaren geräteeigenen Scheibe ausgeführt. Ein cHUD ist somit als abgeschlossenes System zu betrachten, welches als Ganzes, also insbesondere funktionsbereit, in das jeweilige Fahrzeug eingesetzt werden kann. Daher ist es möglich, ein cHUD in verschiedene Fahrzeuge zu integrieren und dabei immer die gleiche optische Leistungsfähigkeit zu erreichen. Im Allgemeinen ist das Gehäuse des cHUD dabei staubdicht ausgeführt.

Wichtig für das Funktionieren des cHUD ist hier, dass die an der optischen Abbildungsleistung beteiligten Komponenten und Einheiten an genau definierten Punkten fest angeordnet sind. Zu diesen gehört zumindest die Kombiniereinheit, eine Umlenkeinheit, welche beispielsweise als planarer oder gekrümmter Umlenkspiegel ausgeführt sein kann, und eine Bildgebungseinheit. Die Bildgebungseinheit kann als Bildschirm oder Display ausgeführt sein. Gegebenenfalls können auch weitere planare oder gekrümmte Spiegel Teil des optischen Systems des cHUD sein. Aus einer gewünschten Systemleistung heraus sind dabei die jeweiligen Abmessungen und Anordnungen der an der optischen Abbildungsleistung beteiligten Komponenten und Einheiten vorgegeben. Hieraus ergeben sich dann die notwendigen Gehäuseabmessungen. Die optische Abbildungsleistung hängt entsprechend mit den Gehäuseabmessungen zusammen, wobei größere Gehäuse im Allgemeinen zu einer besseren optischen Abbildungsleistung führt. Um unterschiedliche Augenpositionen verschiedener Fahrzeugführer abdecken zu können, ist die Kombiniereinheit dabei typischerweise rotatorisch und/oder translatorisch gelagert und verstellbar.

So offenbart beispielsweise die EP 2 093 094 B1 ein Kopf-oben-Anzeige-System mit einem Gehäuse, in welchem ein Displaymittel über ein Spiegelelement, welches ein von dem Displaymittel ausgesendetes Licht auf ein Kombinierelement reflektiert. Displaymittel und Spiegelelement sind dabei in einem Gehäuse angeordnet, an welchem auch das Kombinierelement rotierbar gelagert sein kann.

Die US 5 640 275 A beschreibt ein Head-Up-Display mit einer Kathodenstrahlröhre, welche über eine Reihe von Linsen und einen Spiegel ein leuchtendes Bild auf ein holografisches optisches Element projiziert. Dabei sind die Kathodenstrahlröhre und die Linsen nebst dem Spiegel in einem abgedichteten Gehäuse angeordnet.

Der vorliegenden Erfindung liegt die Aufgabe zu Grunde, die optische Abbildungsleistung eines Kopf-oben-Anzeige-Systems oder eines Head-Up-Display-Systems für ein Kraftfahrzeug zu verbessern und insbesondere eine Gestaltungsfreiheit und eine Montierfreundlichkeit zu erhöhen.

Diese Aufgabe wird durch die Gegenstände der unabhängigen Patentansprüche gelöst. Vorteilhafte Ausführungsformen ergeben sich aus den abhängigen Patentansprüchen, der Beschreibung und den Figuren.

Die Erfindung betrifft zunächst ein modulares Head-Up-Display-System oder Kopf-oben-Anzeige-System für ein Kraftfahrzeug, mit einem Modul eines ersten Modultyps, wie es im Folgenden beschrieben wird, sowie einem weiteren Modul eines zweiten Modultyps, wie es ebenfalls weiter unten beschrieben ist. Die Modularität ermöglicht eine fahrzeugspezifische Anpassung der optischen Abbildungsleistung sowie eine bauraumoptimierte Integration des Systems in das entsprechende Fahrzeug. Es ergibt sich aufgrund der flexibleren Nutzung des Bauraums auch eine höhere Designfreiheit und eine leichtere Montage und Demontage.

In einer vorteilhaften Ausführungsform des Head-Up-Display-Systems oder Kopf-oben-Anzeige-Systems ist dabei vorgesehen, dass ein optischer Weg von einer Bilderzeugungseinheit des einen Moduls des ersten Modultyps zu einer Umlenkeinheit des weiteren Moduls des zweiten Modultyps die Abmessungen eines Gehäuses des einen Moduls des ersten Modultyps übertrifft. Der optische Weg kann dabei insbesondere ein direkter optischer Weg sein, das heißt der optische Weg zwischen der Bilderzeugungseinheit und der Umlenkeinheit als erste Umlenkeinheit im optischen Weg. Es ist dann also insbesondere keine weitere Umlenkeinheit zwischen der Bilderzeugungseinheit und der besagten Umlenkeinheit des weiteren Moduls angeordnet. Unter den Abmessungen des Gehäuses kann eine Länge, Breite oder Höhe verstanden werden. Da die optische Abbildungsleistung eines Kopf-oben-Anzeige-Systems maßgeblich von der Länge des optischen Weges abhängt, ergibt sich so der Vorteil, dass die optische Abbildungsleistung über das Maß hinaus verbessert werden kann, welches bei einem Anordnen der Umlenkeinheit in dem Modul des ersten Modultyps mit dem entsprechenden Gehäuse möglich ist.

Die Erfindung umfasst auch ein Modul des ersten Modultyps für das modulare Head-Up-Display-System oder Kopf-oben-Anzeige-System für ein Kraftfahrzeug. Dieses Modul umfasst das Gehäuse, die Bildgebungseinheit zum Erzeugen einer optischen Bildinformation und eine Kombiniereinheit zum Überlagern der erzeugten optischen Bildinformation mit einer weiteren optischen Bildinformation. Die Bildgebungseinheit ist dabei in dem Gehäuse angeordnet. Die Kombiniereinheit ist in oder an dem Gehäuse angeordnet. Um die optische Abbildungsleistung zu verbessern, ist das Modul ausgelegt, die erzeugte Bildinformation über eine außerhalb des Gehäuses in einer vorbestimmten Lage angeordnete optische Umlenkeinheit auf die Kombiniereinheit zu projizieren oder zu strahlen. Für das Funktionieren des einen Moduls des ersten Modultyps ist die optische Umlenkeinheit also in einem vorbestimmten Abstand und/oder einer vorbestimmten Position und/oder einer vorbestimmten Ausrichtung relativ zu dem einen Modul anzuordnen. Dabei weist die optische Umlenkeinheit vorbestimmten optische Eigenschaften auf. Der Fachmann kann so das eine Modul auslegen, in einem vorbestimmten Winkel in einer vorbestimmten Größe die Bildinformation derart auf die Umlenkeinheit zu projizieren, dass die optische Bildinformation in einem gewünschten Winkel und in einer gewünschten Größe auf die Kombiniereinheit des einen Moduls umgelenkt oder reflektiert wird. Das eine Modul kann auch vordefinierte Anschraubpunkte aufweisen, zu welchem die genannten optischen Einheiten, insbesondere Bildgebungseinheit und Kombiniereinheit, für jedes Modul des ersten Modultyps eine vorbestimmte Lage einnehmen.

Das hat den Vorteil, dass, wie bereits oben erwähnt, ein optischer Weg im Vergleich zu einem Anordnen der entsprechenden optischen Umlenkeinheit in dem Gehäuse des einen Moduls ersten Modultyps verlängert werden kann und somit eine optische Abbildungsleistung verbessert ist. Dadurch, dass mit Bildgebungseinheit und Kombiniereinheit die im Vergleich zur Umlenkeinheit wesentlich komplexeren und empfindlicheren Einheiten kompakt bereitgestellt werden können, kann das verhältnismäßig kostenintensive eine Modul des ersten Modultyps weiterhin kostensparend in verschiedenen Fahrzeugen eingesetzt werden. Die optische Abbildungsleistung kann durch eine fahrzeugspezifische Anpassung der Umlenkeinheit, wie sie weiter unten gemäß dem weiteren Modul des zweiten Modultyps beschrieben ist, mit den damit verbunden Vorteilen optimiert werden.

In einer vorteilhaften Ausführungsform des Moduls ist vorgesehen, dass die Kombiniereinheit rotatorisch und/oder translatorisch verstellbar ist. Das hat den besonderen, über den bekannten Vorteil hinausgehenden Vorteil, dass so für unterschiedliche Kraftfahrzeuge, bei welchen sich die für das Funktionieren der Kopf-oben-Anzeige erforderliche Umlenkeinheit an verschiedenen Lagen vorliegen kann, jeweils das baugleiche Modul oder das im Wesentlichen baugleiche Modul des ersten Modultyps verwendet werden kann.

In einer weiteren vorteilhaften Ausführungsform des Moduls ist vorgesehen, dass der erste Modultyp mehrere Ausführungen des Moduls umfasst, welche jeweils eine unterschiedliche Kombiniereinheit haben. Dabei unterscheiden sich die jeweiligen Kombiniereinheiten in Form und/oder Größe von beispielsweise einem semi-transparenten Kombinierspiegel. Das hat den Vorteil, dass das eine Modul kostengünstig an unterschiedliche Kraftfahrzeugtypen angepasst werden kann, beziehungsweise für jeden Kraftfahrzeugtyp die entsprechende Ausführung des Moduls gewählt werden kann. Es kann somit für jeden Kraftfahrzeugtyp eine optische Abbildungsleistung erreicht werden.

Dabei kann insbesondere vorgesehen sein, dass die Kombiniereinheit, insbesondere ein semi-transparenter Kombinierspiegel, zerstörungsfrei austauschbar ist. Dies erhöht die Montage- und Wartungsfreundlichkeit und erleichtert ebenfalls das Anpassen des Moduls an unterschiedliche Kraftfahrzeugtypen.

In einer weiteren vorteilhaften Ausführungsform des einen Moduls ist vorgesehen, dass das eine Modul keine optische Umlenkeinheit zum Projizieren der von der Bildgebungseinheit erzeugten optischen Bildinformation auf die Kombiniereinheit aufweist. Unter der nicht im Modul vorhandenen optischen Umlenkeinheit ist hier insbesondere eine letzte optische Umlenkeinheit zu verstehen, welche sich in einem optischen Weg der optischen Bildinformation zu der Kombiniereinheit unmittelbar vor der Kombiniereinheit befindet. Zwischen der nicht als Teil des einen Moduls vorhandenen und für ein Funktionieren des Kopf-oben-Anzeige-Systems nötigen letzten optischen Umlenkeinheit und der Kombiniereinheit ist dann somit keine weitere Umlenkeinheit zu finden.

Die Erfindung betrifft auch ein weiteres Modul des zweiten Modultyps für das modulare Head-Up-Display-System oder Kopf-oben-Anzeige-System für ein Kraftfahrzeug. Das weitere Modul umfasst die Umlenkeinheit zum Umlenken oder Projizieren der von der Bilderzeugungseinheit erzeugten optischen Bildinformation zu der Kombiniereinheit, welche dem Überlagern der erzeugten optischen Bildinformation mit der weiteren optischen Bildinformation dient. Um die optische Abbildungsleistung zu verbessern, ist hier die Umlenkeinheit an einem Trägerelement gehalten, welches die Umlenkeinheit außenseitig des Gehäuses der Bilderzeugungseinheit oder des einen Moduls des ersten Modulstyps in einer vorbestimmten Lage hält. Dabei kann das Trägerelement den Anschraubpunkten des Moduls ersten Modultyps entsprechende Anschraubpunkte aufweisen. Aus diesen entsprechenden Anschraubpunkten ist somit die Lage der Umlenkeinheit und, bei einem verbinden mit den ersten Anschraubpunkten, auch die Lage von Bilderzeugungseinheit, Kombiniereinheit und Umlenkeinheit zueinander vorgegeben. Diese Lage kann in der Steuerelektronik des einen Moduls des ersten Modultyps hinterlegt sein. Das hat den Vorteil, dass die optische Abbildungsleistung fahrzeugspezifisch verbessert werden kann und eine kostengünstige bauraumoptimierte Integration des Kopf-oben-Anzeige-Systems in das entsprechende Kraftfahrzeug erfolgen kann. Es wird somit der notwendige Bauraum im Fahrzeug optimiert. Dies kann eine Verringerung und/oder eine Verformung oder eine Verschiebung des erforderlichen Bauraums im Vergleich zu bekannten combinerHead-Up-Displays umfassen.

In einer weiteren vorteilhaften Ausführungsform des Moduls ist vorgesehen, dass das Trägerelement Teil eines Armaturenbretts oder einer Intrumententafel ist, insbesondere einstückig mit dem Armaturenbrett oder der Instrumententafel gefertigt ist, oder kraftschlüssig mit dem Armaturenbrett oder der Instrumententafel verbunden ist. Das Trägerelement kann hier insbesondere ausgelegt sein, in einer Fahrzeughochrichtung über einem Kombinationsoder Kombiinstrument angeordnet zu sein. Das Trägerelement kann beispielsweise eine Hutze sein oder umfassen. Das hat den Vorteil, dass die Umlenkeinheit so besonders vibrationsfrei und stabil gehalten ist. Des Weiteren kann so der Bauraum besonders effizient optimiert werden. Die Anordnung über dem Kombinationsinstrument ermöglicht ein besonders komfortables Anzeigen der Bildinformation für den Fahrzeugführer.

In einer anderen vorteilhaften Ausführungsform des weiteren Moduls ist vorgesehen, dass der zweite Modultyp mehrere Ausführungen des weiteren Moduls umfasst, welche je eine unterschiedliche Umlenkeinheit und/oder ein unterschiedliches Trägerelement haben. Dabei unterscheiden sich die jeweiligen Umlenkeinheiten in Form und/oder Größe, beispielsweise in Form und/oder Größe und/oder Ausrichtung einer Spiegelfläche. Das hat den Vorteil, dass auf kostengünstige und effiziente Weise die optische Abbildungsleistung angepasst und verbessert werden kann. Besonders vorteilhaft ist dies, wenn auch die Kombiniereinheit in dem entsprechenden einen Modul ersten Modultyps, wie oben beschrieben, unterschiedlich ausgeführt sein kann.

Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Ausführungsbeispiele der Erfindung werden nachfolgend anhand schematischer Zeichnungen näher erläutert. Dabei zeigen:
- Fig. 1: ein combiner-Head-Up-Display gemäß dem Stand der Technik; und
- Fig. 2: ein combiner-Head-Up-Display gemäß einer Ausführungsform der Erfindung.

In den Figuren werden gleiche oder funktionsgleiche Elemente mit den gleichen Bezugszeichen versehen.

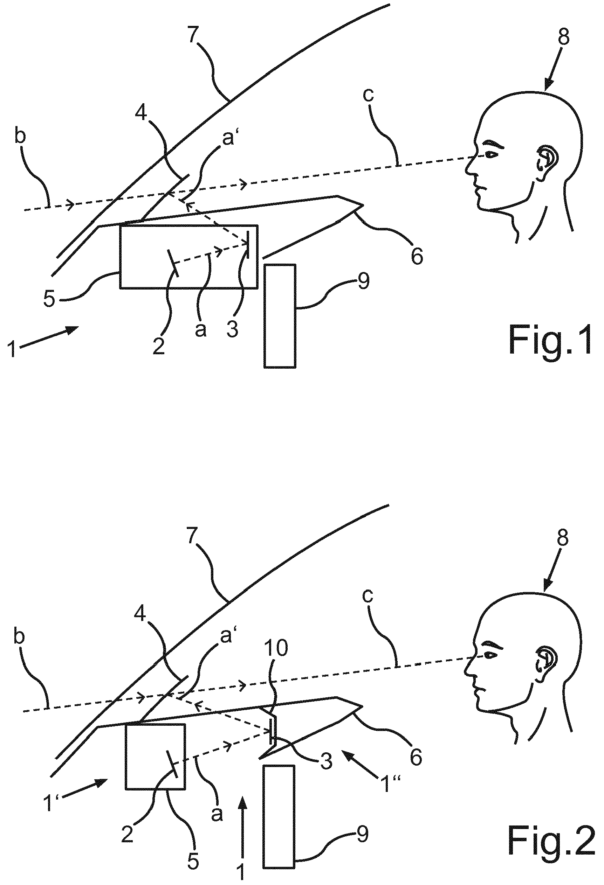

In Fig. 1 ist ein combiner-Head-Up-Display gemäß dem Stand der Technik dargestellt. Das als combiner-Head-Up-Display ausgeführte modulare Kopf-oben-Anzeige-System 1 umfasst dabei vorliegend eine Bilderzeugungseinheit 2, eine Umlenkeinheit 3 sowie eine Kombiniereinheit 4. Es sind hier die Bildgebungseinheit 2 und die Umlenkeinheit 3 in, die Kombiniereinheit 4 hingegen an einem Gehäuse 5 angeordnet. Das Kopf-oben-Anzeige-System 1 ist somit ein abgeschlossenes System, welches als solches, also als Ganzes, in unterschiedliche Kraftfahrzeuge eingebaut werden kann. Vorliegend ist es in einem Armaturenbrett 6 in der Nähe einer Windschutzscheibe 7 angeordnet, so dass die Kombiniereinheit 4 in einen Sichtbereich eines Fahrzeugführers 8 einbringbar ist, beispielsweise in dem die Kombiniereinheit 4 ausgeklappt wird. Zur besseren Übersichtlichkeit ist auch ein Kombiinstrument 9 eingezeichnet.

Bestimmungsgemäß wird hier eine von der Bildgebungseinheit 2 erzeugte optische Bildinformation entlang eines optischen Weges a auf die Umlenkeinheit 3 projiziert, welche die erzeugte Bildinformation über den abgelenkten optischen Weg a' zur Kombiniereinheit 4 umlenkt. Dort wird der abgelenkte optische Weg a' der erzeugten Bildinformation mit dem weiteren optischen Weg b einer weiteren, hier einer Umgebung des Kraftfahrzeugs entstammenden Bildinformation auf den optischen Weg c zum Fahrzeugführer 8 gelenkt. Der Fahrzeugführer 8 kann so gleichzeitig die erzeugte Bildinformation des Kopf-oben-Anzeige-Systems 1 sowie die weitere Bildinformation der Umgebung erfassen.

In Fig. 2 ist eine beispielhafte Ausführungsform eines Kopf-oben-Anzeige-Systems für ein Kraftfahrzeug dargestellt. Im Gegensatz zu dem Kopf-oben-Anzeige-System 1 von Fig. 1 handelt es sich hier um ein modulares Kopf-oben-Anzeige-System 1. Dieses umfasst ein Modul 1' eines ersten Modultyps und ein weiteres Modul 1" eines zweiten Modultyps. Das eine Modul 1' weist dabei das Gehäuse 5 auf, welches die Bildgebungseinheit 2 umschließt und die Kombiniereinheit 4 hält. Die Umlenkeinheit 3 ist nicht Element des einen Moduls 1', vielmehr erstreckt sich der optische Weg a zwischen Bildgebungseinheit 2 und Umlenkeinheit 3 aus dem Gehäuse 5 und damit dem einen Modul 1' heraus. Es sind dabei das eine Modul 1' beziehungsweise die bildgebende Einheit 2 derart ausgerichtet, dass der optische Weg a' genau auf die Umlenkeinheit 3 an einem Trägerelement 10 weist. Die Umlenkeinheit 3 und das Trägerelement 10 sind hier Teil des weiteren Moduls 1" des zweiten Modultyps. Im gezeigten Beispiel ist das Trägerelement 10 einstückig mit dem Armaturenbrett 6 ausgeführt und befindet sich an einer dem Fahrer 8 abgewandten Rückseite des Armaturenbretts 6, vorliegend an einer Rückseite einer Hutze des Armaturenbretts 6. Das Trägerelement 10 ist hier oberhalb des Kombiinstruments 9 angeordnet. Da das Trägerelement 10 die Umlenkeinheit 3, die beispielsweise als einfacher Umlenkspiegel ausgeführt ist, in einer vorbestimmten Lage relativ zu dem einen Modul 1' und der darin befindlichen bildgebenden Einheit 2 hält, wird der umgelenkte optische Weg a' genau auf die Kombiniereinheit 4 gerichtet. Dort wird entsprechend die Bildinformation der Bildgebungseinheit 2 mit weiteren Bildinformationen aus der Umwelt kombiniert und über den weiteren optischen Weg c zu dem Fahrzeugführer 8 gelenkt.

Das Anordnen der Umlenkeinheit 3 unabhängig von den Beschränkungen des Gehäuses 5 führt im gezeigten Beispiel dazu, dass der optische Weg a und der umgelenkte optische Weg a' aus Fig. 1 eine Vergrößerung oder Verlängerung des optischen Weges a zwischen Bildgebungseinheit 2 und Umlenkeinheit 3 sowie des abgelenkten optischen Weges a' zwischen Umlenkeinheit 3 und Kombiniereinheit 4 ermöglicht hat. Dies führt zu einer verbesserten optischen Abbildungsleistung. Auch ist das Gehäuse 5 deutlich kleiner ausgeführt, so dass eine Nutzung des unterhalb der Windschutzscheibe 7 befindlichen Innenraums beziehungsweise des Bauraums hinter dem Armaturenbrett 6 deutlich optimiert ist. Über ein Austauschen der Kombiniereinheit 4 kann das vorliegend ansonsten baugleiche eine Modul 1' auch an andere Kraftfahrzeuge, welche beispielsweise anders geformte Armaturenbretter 6 und somit andere Konfigurationen von Trägerelement 10 und Umlenkeinheit 3, also von dem weiteren Modul 1", nach sich ziehen, angepasst werden. Ein teurer beziehungsweise komplexer Teil des einen Moduls 1' mit Bildgebungseinheit 2 und beispielsweise einer Steuerungseinheit sowie weiteren aufwändigen Komponenten, kann dabei für unterschiedliche Ausführungsformen des Moduls 1' identisch bleiben.

## Patentansprüche

1. Modulares Kopf-oben-Anzeige-System (1) für ein Kraftfahrzeug, mit einem Modul (1') eines ersten Modultyps gemäß Anspruch 3 und einem weiteren Modul (1") eines zweiten Modultyps gemäß Anspruch 8.

2. Kopf-oben-Anzeige-System (1) gemäß Anspruch 1,
**dadurch gekennzeichnet, dass**
ein optischer Weg (a) von einer Bildgebungseinheit (2) des einen Moduls (1') zu einer Umlenkeinheit (3) des weiteren Moduls (1") die Abmessungen eines Gehäuses (5) des einen Moduls (1') übertrifft.

3. Modul (1') des ersten Modultyps für das modulare Kopf-oben-Anzeige-System (1) für ein Kraftfahrzeug, mit
- dem Gehäuse (5),
- die in dem Gehäuse (5) angeordneten Bildgebungseinheit (2) zum Erzeugen einer optischen Bildinformation, und
- einer an dem Gehäuse (5) angeordneten Kombiniereinheit (4) zum Überlagern der erzeugten optischen Bildinformation mit einer weiteren optischen Bildinformation,
**dadurch gekennzeichnet, dass**
das Modul (1') ausgelegt ist, die erzeugte Bildinformation über eine außerhalb des Gehäuses (5) in einer vorbestimmten Lage angeordnete optische Umlenkeinheit (3) auf die Kombiniereinheit (4) zu projizieren.

4. Modul (1') nach Anspruch 3,
**dadurch gekennzeichnet, dass**
die Kombiniereinheit (4) rotatorisch und/oder translatorisch verstellbar ist.

5. Modul (1') nach einem der Ansprüche 3 bis 4,
**dadurch gekennzeichnet, dass**
der erste Modultyp mehrere Ausführungen des Moduls (1') umfasst, welche je eine unterschiedliche Kombiniereinheit (4) haben, wobei die jeweiligen Kombiniereinheiten (4) sich in Form und/oder Größe unterscheiden.

6. Modul (1') nach Anspruch 5,
**dadurch gekennzeichnet, dass**
die Kombiniereinheit (4) zerstörungsfrei austauschbar ist.

7. Modul (1') nach einem der der Ansprüche 3 bis 6,
**dadurch gekennzeichnet, dass**
das Modul (1') keine optische Umlenkeinheit (3) zum Projizieren der von der Bildgebungseinheit (2) erzeugten optischen Bildinformation auf die Kombiniereinheit (4) aufweist.

8. Modul (1") des zweiten Modultyps für das modulare Kopf-oben-Anzeige-System (1) für ein Kraftfahrzeug, mit
- der Umlenkeinheit (3) zum Umlenken der von der Bildgebungseinheit (2) erzeugten optischen Bildinformation zu der Kombiniereinheit (4), die dem Überlagern der erzeugten optischen Bildinformation mit der weiteren optischen Bildinformation dient,
**dadurch gekennzeichnet dass**
die Umlenkeinheit (3) an einem Trägerelement (10) gehalten ist, welches die Umlenkeinheit (3) außenseitig des Gehäuses (5) der Bildgebungseinheit (2) in einer vorbestimmten Lage hält.

9. Modul (1") nach Anspruch 8,
**dadurch gekennzeichnet, dass**
das Trägerelement (10) Teil eines Armaturenbretts (6) ist, insbesondere einstückig mit dem Armaturenbrett (6) gefertigt ist, oder kraftschlüssig mit dem Armaturenbrett (6) verbunden ist.

10. Modul (1") nach einem der Ansprüche 8 bis 9,
**dadurch gekennzeichnet, dass**
der zweite Modultyp mehrere Ausführungen des Moduls (1") umfasst, welche je eine unterschiedliche Umlenkeinheit (3) haben, wobei die jeweiligen Umlenkeinheiten (3) sich in Form und/oder Größe unterscheiden.
